# EUROPÄISCHE PATENTSCHRIFT

(11) **EP 1 047 522 B1**
(45) Veröffentlichungstag und Bekanntmachung des Hinweises auf die Patenterteilung: **04.01.2006**
(21) Anmeldenummer: 98959723.2
(22) Anmeldetag: 16.10.1998
(51) Int. Cl.: B23K 26/06, B23K 26/02, B23K 26/08

(54) **VERFAHREN UND VORRICHTUNG ZUM BEARBEITEN VON WERKSTÜCKEN MIT LASERSTRAHLUNG**
METHOD AND DEVICE FOR TREATING WORK PIECES WITH LASER RADIATION
PROCEDE ET DISPOSITIF POUR USINER DES PIECES AVEC UN FAISCEAU LASER

(30) Priorität: 22.10.1997 DE 19746697; 19.12.1997 DE 19756703
(43) Veröffentlichungstag der Anmeldung: 02.11.2000
(73) Patentinhaber: Fraunhofer-Gesellschaft zur Förderung der angewandten Forschung e.V., 80686 München (DE)
(72) Erfinder: PETRING, Dirk, NL-6462 HE Kerkrade (NL); TREUSCH, Hans-Georg, D-52074 Aachen (DE); POPRAWE, Reinhart, D-52072 Aachen (DE); LOOSEN, Peter, D-52076 Aachen (US)
(74) Vertreter: Draudt, Axel Hermann Christian
(86) Internationale Anmeldenummer: PCT/DE1998/003020
(87) Internationale Veröffentlichungsnummer: WO 1999/020428

(56) Entgegenhaltungen:
- EP-A- 0 504 026
- DE-A- 2 658 682
- DE-A- 3 344 709
- US-A- 4 063 064
- US-A- 4 943 700
- US-A- 5 352 495

## Beschreibung

Die Erfindung bezieht sich auf ein Verfahren zum Bearbeiten von Werkstücken mit Laserstrahlung, die mit einem zum Werkstück relativ nicht bewegten Laserstrahl auf eine zu bearbeitende Werkstückfläche fokussiert wird, wobei der Laserstrahl linienähnlich fokussiert wird und sein Strahlfleck vollflächig praktisch ausschließlich der zu bearbeitenden Werkstückfläche entspricht.

Ein derartiges Verfahren ist aus der US-A-4,943,700 bekannt. In diesem Dokument wird auf eine Vorrichtung beschreiben, die zum Bearbeiten von Werkstücken mit Laserstrahlung dient. Dabei wird ein zum Werkstück relativ nicht bewegter Laserstrahl auf eine zu bearbeitende Werkstückfläche fokussiert, wobei der Laserstrahl linienähnlich fokussiert wird und sein Strahlfleck vollflächig praktisch ausschließlich der zu bearbeitenden Werkstückfläche entspricht. Die zur Zeit am häufigsten verwendete Methode zum Querteilen von Bandmaterial besteht im Einsatz von mechanischen Mitteln, sogenannten "fliegenden Scheren" oder "Exzenterscheren". Hierbei wird ein quer zum Band angeordnetes Messer oder eine Schlagschere auf einer kurzen Strecke mit dem laufenden Band mitbewegt. Der gleichzeitige Ablauf von Messerhub und Mitbewegung mit dem Band muß derart durchgeführt werden, daß das Messer während des Eintauchens in das Bandmaterial exakt mit dem Band mitfährt und danach gegen die Bandlaufrichtung zurückschwenkt. Die dazu erforderlichen Antriebe, beispielsweise Exzenterantriebe, sollen möglichst hohe Taktraten erreichen. Hier sind aber aus mechanischen Gründen Grenzen gesetzt, insbesondere wenn die Messer- oder Antriebsmassen ein größeres Gewicht haben und die Beschleunigungs- bzw. Verzögerungskräfte dementsprechend groß werden. Insbesondere führt das dazu, daß der Exzenter eine Einlauf- und eine Auslaufzeit benötigt, wie auch im Hinblick auf die hohen auftretenden Kräfte ein sehr aufwendiges stabiles Maschinengerüst. Der Schneidprozeß induziert mechanische Spannungen im Werkstoff des Werkstücks und kann im Schnittkantenbereich zu Gratbildung und Kaltverfestigung führen.

Der Erfindung liegt daher die Aufgabe zugrunde, ein Verfahren der eingangs genannten Art anzugeben, womit die eingangs beschriebenen Nachteile vermieden und die angegebenen vorteile erreicht werden, und das mit technisch einfachen Mitteln ein sicheres und sauberes Schneiden von sogenannten Folien- oder Bandmaterial gewährleistet.

Die vorgenannte Aufgabe wird durch ein Verfahren gemäß Anspruch 1 gelöst.

Für die Erfindung ist wesentlich, daß der Strahlfleck des Laserstrahls derart linienartig fokussiert wird, daß möglichst genau die zu bearbeitende Werkstückfläche bestrahlt wird, und zwar vollflächig. Infolgedessen wird auch die gesamte zu bearbeitende Werkstückfläche gleichzeitig erhitzt und es treten die durch die Erhitzung gewünschten Vorgänge im Werkstück gleichzeitig auf, z.B. ein Aufschmelzen einer Trennlinie oder einer Fügelinie. Es ist aber auch möglich, Werkstücke größerflächig zu bearbeiten, sofern der Laserstrahl linienähnlich vollflächig arbeitet, beispielsweise bei Werkstoffumwandlungen auf Härtespuren. Für den praktischen Einsatz ist dieses vorbeschriebene Verfahren besonders vorteilhaft, weil eine Laserstrahlungsquelle und/oder zumindest ein die Laserstrahlung abgebender Bearbeitungskopf mit einem bewegten Werkstück während dessen Bestrahlung gleich schnell mitbewegt wird. Die Mitbewegung der Laserstrahlungsquelle mit einem bewegten Werkstück ermöglicht den Einsatz des Verfahrens insbesondere zum Querteilen von Folien- oder Bandmaterial. Das vorbeschriebene Trennverfahren besitzt die Nachteile der bekannten mechanischen Trenneinrichtungen nicht. Insbesondere beim Einsatz von Diodenlaser-Barren oder Diodenlaser-Stacks ist die zu bewegende Masse vergleichsweise gering. Ihre Verfahrgeschwindigkeit bzw. die Verfahrgeschwindigkeit der Laserschneidköpfe kann daher bedeutend höher sein, als die Bandlaufgeschwindigkeit. Es lassen sich hohe Taktraten bzw. kurze Bandabschnitte zwischen zwei Bearbeitungsvorgängen erzeugen, wenn am laufenden werkstück bearbeitet wird. Die Baulängen der bewegten Teile sind in Förderrichtung relativ klein und dementsprechend ist auch die Stellfläche für das Schneidgerüst relativ klein.

Es kann so verfahren werden, daß eine über ihre gesamte Länge gleich schmale fokussierte Linie verwendet wird. Derartige gleich schmale Linien eignen sich besonders für massenfertigungsgerechte Füge- und Trennverfahren. Die schmale fokussierte Linie kann so ausgebildet werden, daß mit den verfügbaren Laserquellen hohe Energiedichten zu erreichen sind, wie sie beim Fügen oder Trennen erforderlich sind. Beispielsweise können Fein- oder Feinstblechbänder oder Metallfolien quergeteilt werden. Derartige schmal fokussierte Linien sind auch dann vorteilhaft, wenn eine mechanische Bearbeitung des Materials wegen Verschleiß des Werkzeugs und/oder unzulässiger mechanischer Beanspruchung des Bandmaterials problematisch ist. Derartige Trennverfahren werden zweckmäßiger Weise so durchgeführt, daß mit linienförmiger Laserstrahlung die gesamte Breite einer Platte oder eines laufenden Bandes impulsartig getrennt wird.

Mit dem vorbeschriebenen Verfahren lassen sich formen- und bahnenmäßig vielzählige Bearbeitungen durchführen. Zweckmäßig ist es, wenn so verfahren wird, daß die Linie sich über die gesamte Werkstückbreite erstreckt und/oder einen Umriß mit unbestrahlter Mitte bildet und/oder einen beliebig vorbestimmten Linienverlauf hat und/oder im Verlauf ungleiche Linienbreite aufweist. Sich über die gesamte Werkstückbreite erstreckende Linien sind insbesondere bei einem Trennen oder bei einem Fügen von Werkstücken vorteilhaft. Wird mit einer Linie ein Umriß mit unbestrahlter Mitte gebildet, so können dem Umriß entsprechende Ausnehmungen des Werkstücks hergestellt werden. Dabei ist die Form der Linie im Grundsatz ohne Belang. Die Linie kann einen beliebig vorbestimmten Linienverlauf haben, beispielsweise Krümmungen aufweisen. Die im Verlauf ungleiche Linienbreite kann vorteilhaft sein, wenn auf die Form einer Trenn- oder Fügelinie oder Ausnehmung Einfluß genommen werden soll.

Falls die zur Verfügung stehenden Laserquellen begrenzte Leistung haben, kann es zweckmäßig sein, das Verfahren so durchzuführen, daß eine Linie aus Linienteillängen verwendet wird, die die gesamte Linienlänge zeitgleich oder taktweise nacheinander abdecken. Es wird dann so verfahren, daß vorzugsweise aus mehreren Laserquellen stammende Laserstrahlung verwendet wird, die aus lückenlos aufgereihten Einzelstrahlen oder Gruppen von Einzelstrahlen besteht, die die gesamte Linienlänge oder eine Teillänge zeitgleich abdecken. Bei zeitgleicher Bestrahlung der gesamten Linienlänge können also mehrere Laserquellen zum Einsatz kommen. Ein einziger Laser reicht aus, wenn die gesamte Linienlänge taktweise nacheinander abgearbeitet wird.

Besonders vorteilhaft ist es, wenn die Laserstrahlung mit Diodenlaser-Barren und/oder Diodenlaser-Stacks erzeugt wird. Diodenlaser-Barren und Diodenlaser-Stacks benutzen jeweils eine Vielzahl von Laserdioden. Deren Laserstrahlung kann durch geeigneten Aufbau der Barren oder Stacks linienförmig ausgerichtet und fokussiert werden. Sie sind besonders geeignet um den Laserstrahl, der dann aus einer Vielzahl von Teilstrahlen der einzelnen Laserdioden besteht, linienähnlich zu fokussieren und vollflächig auf die gesamte zu bearbeitende Werkstückfläche strahlen zu lassen.

Das Verfahren kann so durchgeführt werden, daß die Laserstrahlung zum Trennen eingesetzt wird. Es erfolgt eine scherenähnliche Bearbeitung, denn das Werkstück wird impulsartig bestrahlt und in seine Trennstücke zerlegt. Es liegt ein berührungsloses Schneidverfahren vor, das die erheblichen Nachteile mechanischer, mit Messern durchgeführter Trennverfahren nicht aufweist. Insbesondere werden mechanische Werkstückverformungen vermieden.

Vorteilhafterweise wird das Verfahren so durchgeführt, daß während der Bestrahlung des Werkstücks dessen Trennen der Trennstücke bewirkende mechanische oder magnetische Mittel verwendet werden. Mit Hilfe der mechanischen oder magnetischen Mittel wird von Schmelze freier Zwischenraum zwischen den Trennteilen erzeugt. Es ist dann nicht nötig, die bearbeitete Werkstückfläche weiterhin zu bestrahlen, um ein vorzeitiges Erstarren des aufgeschmolzenen Werkstoffs vor dem Trennen der Trennteile voneinander zu verhindern. Mit Hilfe der magnetischen Mittel, beispielsweise eines auf die Schmelze einwirkenden Magnetfeldes, kann mechanisch berührungsfrei vorgegangen werden. Die mechanischen Mittel werden zweckmäßig ausgewählt.

Vorteilhaft ist es beispielsweise, wenn als mechanische Mittel Schmelze aus dem aufgeschmolzenen Werkstückbereich austreibende Gasdüsen zur Anwendung kommen. Mit Hilfe der Gasdüsen können Gasstrahlen zum Einsatz kommen, deren Druckwirkung die Schmelze austreibt.

Das Verfahren kann aber auch so durchgeführt werden, daß als mechanische Mittel eine die Trennstücke des Werkstücks voneinander entfernende Trennkraftquelle eingesetzt wird. Im allgemeinsten Fall sind dies an den Trennstücken angreifende Greifer, die die Trennstücke auseinanderziehen.

Wenn eine kontinierliche Bearbeitung durchgeführt werden soll, kann so verfahren werden, daß das Werkstück mit voneinander distanzierten Transportmitteln gefördert wird, zwischen denen die Bearbeitung mit Laserstrahlung erfolgt und die als Trennkraftquellen dienen. Die Transportmittel garantieren die kontinuierliche Förderung des Werkstücks und ersparen zugleich von ihnen separate mechanische Trennmittel.

Das vorbeschriebene Verfahren kann in besonders einfacher Weise dadurch erreicht werden, daß als Transportmittel Treibrollenpaare mit zur Trennstücktrennung unterschiedlich gesteuerten Fördergeschwindigkeiten verwendet werden. Treibrollenpaare sind in der Fördertechnik bewährte Transportmittel und es ist mit vergleichsweise geringem Aufwand möglich, sie mit unterschiedlichen Fördergeschwindigkeiten zu betreiben, so daß infolgedessen eine Trennung der Trennstücke des Werkstücks erreicht werden kann.

Die vorbeschriebenen Verfahrensschritte können zum Teil auch für andere Bearbeitungsverfahren angewendet werden, bei denen Hochenergiestrahlung zum Einsatz kommt. Genannt seien beispielsweise das Härten oder das Löten. Vor allen Dingen ist es aber vorteilhaft, wenn die linienartige Lasertrahlung zum Linienfügen eingesetzt wird. Das Linienfügen ist insbesondere in Massenfertigungsprozessen vorteilhaft, wo es das Punktschweißen verbessern kann, indem größere Linien- bzw. Flächenbereiche bei gleichem zeitlichen Aufwand miteinander verbunden werden und so die Verbindungsfestigkeit erheblich zu steigern ist.

Das Verfahren kann auf Werkstücke unterschiedlichster Werkstoffe und unterschiedlicher Materialien angewendet werden. Vorteilhaft ist es jedoch, wenn ein Werkstück aus Feinblech, Folien oder Kunststoff-Formteilen verwendet wird. Feinbleche bestehen aus Metall und können auch bei geringeren Strahlungsintensitäten einer Linienbearbeitung unterworfen werden, ebenso wie aus Metall oder Kunststoff bestehende Folien oder Kunststoff-Formteile.

Die Erfindung bezieht sich ebenfalls auf eine Vorrichtung zur Bearbeitung von Werkstücken mit Laserstrahlung oder dergleichen Hochenergiestrahlung, die mit einem zum Werkstück relativ nicht bewegten Laserstrahl auf eine zu bearbeitende Werkstückfläche fokussiert ist, wobei der Laserstrahl linienartig fokussiert ist und sein Strahlfleck vollflächig praktisch ausschließlich der zu bearbeitenden Werkstückfläche entspricht und für eine mit dem Werkstück während dessen Bestrahlung gleich schnelle Mitbewegung eines Strahlwerkzeugs ein Exenterantrieb vorhanden ist.

Bei einer solchen Vorrichtung können die eingangs beschriebenen Nachteile vermieden und die angegebenen Vorteile erreicht werden, wenn der Laserstrahl linienartig fokussiert ist und sein Strahlfleck vollflächig praktisch ausschließlich der zu bearbeitenden Werkstückfläche entspricht.

Die Vorrichtung kann als optische Exzenterschere eingesetzt werden, wenn für eine mit dem Werkstück während dessen Bestrahlung gleich schnelle Mitbewegung eines Strahlwerkzeugs ein Exzenterantrieb vorhanden ist. Mit einem solchen Exzenterantrieb wird eine die linienartige Laserstrahlung erzeugende Laserstrahlungsquelle ähnlich wie bei konventionellen mechanischen Exzenterscheren mit Hilfe des Exzenterantriebs während des Bestrahlungsvorgangs mit dem Werkstück, beispielsweise mit einem Band, mitgeführt. Während dieser kurzen Zeit erfolgt keine Relativbewegung zwischen dem Werkstück und dem Werkzeug, wobei der Schneidvorgang am laufenden Band erfolgt. Danach wird die Laserstrahlungsquelle dem Bandlauf entgegengesetzt zurückgeführt, um danach unter Berücksichtigung der Soll-Abschnittslänge einen weiteren Schneidvorgang einzuleiten. Im Gegensatz zur mechanischen Exzenterschere ist ein Hub senkrecht zur Werkstückoberfläche nicht notwendig, aber trotzdem außerhalb des Schneidpulses erlaubt. Die Strahlungsquelle könnte also auch in einer Linearführung oder über das Werkstück in oder gegen Werkstücklaufrichtung bewegt werden und z.B. über eine oder mehrere Pleuelstangen mit einem oder mehreren rotatorischen Motoren angetrieben werden.

Eine Vorrichtung, bei der der Laserstrahl mit einem linienartigen Strahlfleck die gesamte Länge einer auf dem Werkstück vorbestimmten Trennlinie abdeckt und das Trennmittel zur Trennung der Trennstücke des Werkstücks während dessen Bestrahlung vorhanden sind, ist besonders zum Teilen von Werkstücken oder für deren Formgebung durch Ausschneiden bzw. Abschneiden von Werkstückteilen geeignet.

Um zu bewirken, daß sich das Werkstück relativ zum Laserstrahl nicht bewegt, wird die Vorrichtung so ausgebildet, daß sie einen gesteuerten Antrieb aufweist, der eine der Erzeugung des Laserstrahls dienende Laserquelle und/oder eine den Laserstrahl abgebende Vorrichtung etwaigen Werkstückbewegungen und/oder Positionierungen entsprechend zu verstellen vermag. Mit einer solchen Vorrichtung können Bewegungen des Werkstücks in Bezug auf den Laserstrahl oder in Bezug auf mehrere Laserstrahlen ausgeglichen werden. Die Steuerung der Bewegung des Laserstrahls erfolgt in Abstimmung auf die Werkstückbewegung. Eine Relativbewegung zwischen dem Laserstrahl und dem Werkstück findet nicht statt. Mit Hilfe des gesteuerten Antriebs ist es aber auch möglich, unterschiedliche Positionierungen eines Werkstücks oder aufeinander folgend zu bearbeitender Werkstücke auszugleichen, indem der Antrieb entsprechend den unterschiedlichen Positionierungen eines Werkstücks oder mehrerer Werkstücke gesteuert wird. Die Steuerung des Antriebs wird beispielsweise durch ein Positionen erfassendes System beeinflußt, z.B. durch positionsüberwachende Videokameras.

Die vorbeschriebene Vorrichtung kann zum Bearbeiten am laufenden Band, also zum kontinuierlichen Bearbeiten dadurch ausgebildet werden, daß das Werkstück rollengefördert ist, und daß eine Steuereinrichtung für die Werkstückspannung bzw. Trennung vorhanden ist. Die Steuereinrichtung kann die Trennmittel beeinflussen oder die der Rollenförderung dienenden Fördermittel.

In Weiterbildung der Vorrichtung ist vorgesehen, daß zur Erzeugung der Laserstrahlung Diodenlaser-Strahlwerkzeuge vorhanden sind. Als Diodenlaser-Strahlwerkzeuge können beispielsweise Diodenlaser-Barren oder Diodenlaser-Stacks eingesetzt werden, die von ihrem mechanischen Aufbau her für die Erzeugung linienartig fokussierter Laserstrahlung besonders geeignet sind.

Die Strahlwerkzeuge besitzen eine vergleichsweise geringe Masse, so daß hohe relative Rücklaufgeschwindigkeiten erreicht werden können, wie auch geringe zeiten des Anlaufs und des Auslaufs der Vorrichtung.

Die Vorrichtung kann so ausgebildet werden, daß zwei linienähnliche Laserstrahlen vorhanden und aufeinander gegenüberliegende Werkstückflächen desselben Bearbeitungsbereichs oder aufeinander folgender Bearbeitungsbereiche gerichtet sind. Infolgedessen läßt sich das Werkstück schneller bearbeiten, weil es von seinen beiden Seiten gleichzeitig bestrahlt wird, so daß der Aufschmelzvorgang entsprechend schneller vor sich geht, wenn die beiden Laserstrahlen auf denselben Bearbeitungsbereich gerichtet sind. Werden die Laserstrahlen auf einander folgende Bearbeitungsbereiche gerichtet, läßt sich eine entsprechende Steigerung der Bearbeitungsgeschwindigkeit bzw. eine Steigerung der Taktrate insbesondere bei bewegten Laserstrahlwerkzeugen erreichen. Dabei kann die Einstrahlungsrichtung jeweils beibehalten werden. Bei der Bearbeitung eines Bearbeitungsbereichs mit zwei Laserstrahlen wird insbesondere in Verbindung mit einem Exzenterantrieb zur Mitbewegung der Strahlwerkzeuge erreicht, daß die dann erforderlichen beiden Strahlwerkzeuge im Sinne eines Unwuchtausgleichs zusammenwirken. Die Belastungen des Maschinengestells sind geringer und die Vorrichtung arbeitet laufruhig.

Bei Vorhandensein von zwei Laserstrahlen wird die Vorrichtung vorteilhafterweise so ausgebildet, daß die beiden Laserstrahlen im Winkel zueinander angeordnet sind. Der Winkel braucht nur so groß zu sein, daß jeder Laserstrahl nicht in die Abgabevorrichtung des anderen Laserstrahls gelangen und dort unerwünschte Erwärmungen oder Zerstörungen bewirkt.

Die Vorrichtung kann so ausgestaltet werden, daß sie Einstellmittel für den Linienverlauf und/oder die Linienform und/oder den Linienfokus und/oder den Intensitätsverlauf der Laserstrahlung über die Linienlänge aufweist. Mit Hilfe dieser Einstellmittel kann die Vorrichtung sehr anwendungsflexibel ausgebildet werden. Mit den Einstellmitteln für den Linienverlauf können beispielsweise Krümmungen oder Winkel eingestellt werden. Einstellmittel für die Linienform lassen beispielsweise sehr schmale mit nicht ganz so schmalen Linienabschnitten abwechseln. Einstellmittel für den Linienfokus ermöglichen Anpassungen an die Werkstückoberfläche und/oder an die Werkstückdicke. Einstellmittel für den Intensitätsverlauf der Laserstrahlung ermöglichen beispielsweise unterschiedliche Einschweißtiefen.

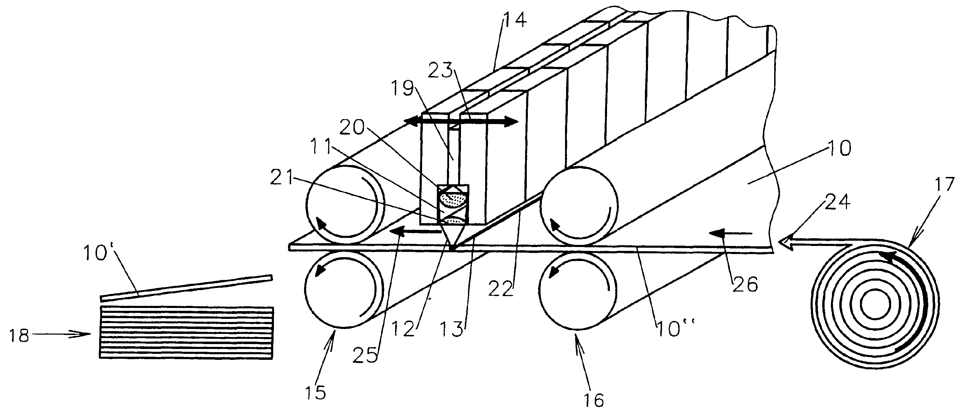

Die Erfindung wird anhand eines in der Zeichnung dargestellten Ausführungsbeispiels erläutert.

Die einzige Figur zeigt in schematischer perspektivischer Ansicht eine sogenannte optische Exzenterschere zum Querteilen von geförderten Blechbändern.

Die in der Figur dargestellte Vorrichtung zum Querteilen von Band 10 wickelt dieses mit einem Treibrollenpaar 16 von einem aufgewickelten Bandvorrat 17 ab. Das Band 10 gelangt vom Treibrollenpaar 16 zum Treibrollenpaar 15 und zwischen beiden Treibrollenpaaren 15,16 wird es geteilt. Das vom zusammenhängenden Band 10 abgeteilte Trennstück 10' wird auf einen Stapel 18 von Trennstücken abgelegt. Das Band ist vorzugsweise Feinstblech und die aufgrund dessen eventuell noch erforderlichen Führungsmittel sind der besseren Übersichtlichkeit wegen weggelassen.

Zur Unterteilung des Bandes 10 bzw. zum Abtrennen der Trennstücke 10' dient eine Laserstrahlungsquelle in Gestalt eines Diodenlaser-Strahlwerkzeugs, das als Diodenlaser-Barren 14 ausgebildet ist. Die von schematisiert dargestellten Laserdioden 19 abgegebene Strahlung gelangt in einen optischen Kolimator 20, welcher Laserstrahlung 11 einer Fokussieroptik 21 zuführt. Diese fokussiert einen Laserstrahl 12 mit einem Strahlfleck 13 auf die zu bearbeitende Werkstückoberfläche des Bandes 10. Der Laserstrahl 12 ist eine schmale Linie, die einer gewünschten Schmelzlinie 22 entspricht. Dementsprechend deckt der Strahlfleck 13 die Schmelzlinie 22 vollflächig ab. Die Schmelzlinie 22 erstreckt sich von der in der Figur vorderen Kante 10" bis zu der in der Figur nicht dargestellten hinteren Kante. Dementsprechend wird das Band 10 über seine gesamte Breite auf der Schmelzlinie 22 aufgeschmolzen. Dieses Aufschmelzen wird dazu benutzt, den in Förderrichtung vorderen Abschnitt des Bandes 10 abzuteilen, so daß ein Trennstück 10' entsteht, das von dem vorderen Treibrollenpaar 15 auf den dargestellten Trennstückstapel 18 gefördert wird.

Der Doppelpfeil 23 gibt an, daß der Diodenlaser-Barren 14 bzw. das Diodenlaser-Strahlwerkzeug in der Förderrichtung 24 des Bandes 10 und dem entgegengesetzt bewegt werden muß. Das ist erforderlich, damit der Strahlfleck auf dem Band genügend lange verweilt, um den Bandwerkstoff aufzuschmelzen und zwar ausschließlich im Bereich der Schmelzlinie 22. Der Schneidpuls bzw. die während einer vorbestimmten Zeit auf das Band einwirkende Laserstrahlung darf ihre Relativstellung nicht ändern. Die Bewegung des Diodenlaser-Barrens 14 zwischen dem Treibrollenpaar 16 und dem Treibrollenpaar 15 erfolgt also ebenso schnell, wie die Bewegung des Bandes 10. Nach der vorbestimmten Einwirkungsdauer der Laserstrahlung auf das Werkstück kann der Diodenlaser-Barren 14 im Bereich zwischen den Treibrollenpaaren 15 und 16 entgegen der Förderrichtung 24 des Bandes 10 zurückbewegt werden. Der Barren 14 wird dem Treibrollenpaar 16 soweit wie möglich und nötig genähert, wobei die Rücktransportgeschwindigkeit in Abhängigkeit von der Fördergeschwindigkeit 24 auf die vorbestimmte Länge des Trennstücks 10' abgestimmt ist. Dabei kann die Rücktransportgeschwindigkeit zur Erzielung besonders kurzer Längen sehr hoch sein, verglichen mit den Rücktransportgeschwindigkeiten konventioneller mechanischer Exzenterscheren.

Die Trennung des Trennstücks 10' vom Band 10 wird durch das Treibrollenpaar 15 unterstützt. Dieses fördert das Trennstück 10' mit höherer Fördergeschwindigkeit, als das Treibrollenpaar 16. Der Unterscheid der Fördergeschwindigkeiten wird durch die unterschiedliche Größe der Fördergeschwindigkeitspfeile 25,26 veranschaulicht. Das Treibrollenpaar 15 ist demgemäß nicht nur ein Transportmittel für das Werkstück, sondern auch eine Trennkraftquelle, die dafür sorgt, daß das Trennstück 10' nach dem Aufschmelzen des Werkstoffs entlang der Schmelzlinie von dem Band 10 im übrigen entfernt wird, weil der aufgeschmolzene Werkstoff den mechanischen Zusammenhalt nicht mehr gewährleistet. Dementsprechend kann die Bestrahlungsdauer der Schmelzlinie kürzer gehalten werden. Es braucht nicht mehr darauf gewartet zu werden, bis das lokale Erwärmen und Schmelzen und/oder Verdampfen des Werkstoffs auf der schmalen Schnittlinie zu einer effektiven Trennung des Trennstücks 10 vom Band geführt hat.

Das Treibrollenpaar 15 bringt eine Bandspannung auf, mit der das Band an der geschwächten Schmelzlinie einfach auseinandergezogen wird. Die Schmelze kann der Verrundung der Schnittkante dienen. Die Dauer der Einwirkung der Laserstrahlung kann auf ein Minimum reduziert werden.

Die vorbeschriebene Ausführungsform eignet sich beispielsweise für das Schneiden bzw. Trennen von Feinstblech mit einer Dicke von weniger als 0,2 mm. In einem solchen Fall können bei einem Einsatz von Diodenlaser-Barren 14 mit Exzenterantrieb Taktraten von 1 bis 10 Hertz erreicht werden. Die Breite der Schmelzlinie bzw. des Strahlflecks 13 entspricht etwa der Wanddicke und die benötigte Strahlleistung beträgt je nach Werkstoff des Bandes und nach Fördergeschwindigkeit 1 bis 10 kW/m.

In der Figur ist eine gerade Schmelzlinie 22 dargestellt worden. Es können jedoch auch beliebig gekrümmte, offene oder geschlossene Schnittkonturen bestrahlt werden. Auf diese Weise können Stanzvorgänge berührungslos und nahezu kräftefrei erfolgen, so daß die Nachteile mechanischer Einwirkungen praktisch vollständig vermieden werden können. Bei diesem bekannten mechanischen Verfahren ist die Schneid- Taktrate aufgrund des Gewichtes des mechanischen Messers und der damit verbundenen kinematischen Grenzen für viele angestrebte Fertigungsprozesse zu klein. Außerdem werden auch die Nachteile von bekannten Trennverfahren mit bewegtem Laserstrahl vermieden, bei denen also der Laserstrahl entlang der Schnittkontur bewegt wird. Auch hier sind die notwendigen Taktraten nicht erreichbar.

## Patentansprüche

1. Verfahren zum Bearbeiten von Werkstücken mit Laserstrahlung (11), die mit einem zum Werkstück relativ nicht bewegten Laserstrahl (12) auf eine zu bearbeitende Werkstückfläche fokussiert wird, wobei der Laserstrahl (12) linienähnlich fokussiert wird und sein Strahlfleck (13) vollflächig praktisch ausschließlich der zu bearbeitenden Werkstückfläche entspricht, **dadurch gekennzeichnet, daß** eine Laserstrahlungsquelle und/oder zumindest ein die Laserstrahlung (11) abgebender Bearbeitungskopf mit einem bewegten Werkstück während dessen Bestrahlung gleich schnell mitbewegt wird.

2. Verfahren nach Anspruch 1, **dadurch gekennzeichnet, daß** eine über ihre gesamte Länge gleich schmale fokussierte Linie verwendet wird.

3. Verfahren nach Anspruch 1 oder 2, **dadurch gekennzeichnet, daß** die Linie sich über die gesamte Werkstückbreite erstreckt und/oder einen Umriß mit unbestrahlter Mitte bildet und/oder einen beliebig vorbestimmten Linienverlauf hat und/oder im Verlauf ungleiche Linienbreite aufweist.

4. Verfahren nach einem oder mehreren der Ansprüche 1 bis 3, **dadurch gekennzeichnet, daß** eine Linie aus Linienteillängen verwendet wird, die die gesamte Linienlänge zeitgleich oder taktweise nacheinander abdecken.

5. Verfahren nach einem oder mehreren der Ansprüche 1 bis 4, **dadurch gekennzeichnet, daß** Laserstrahlung verwendet wird, die aus lückenlos aufgereihten Einzelstrahlen oder Gruppen von Einzelstrahlen besteht, die die gesamte Linienlänge oder eine Teillänge zeitgleich abdecken.

6. Verfahren nach einem oder mehreren der Ansprüche 1 bis 5, **dadurch gekennzeichnet, daß** die Laserstrahlung (11) mit Diodenlaser-Barren (14) und/oder Diodenlaser-Stacks erzeugt wird.

7. Verfahren nach einem oder mehreren der Ansprüche 1 bis 6, **dadurch gekennzeichnet, daß** die Laserstrahlung (11) zum Trennen eingesetzt wird.

8. Verfahren nach Anspruch 7, **dadurch gekennzeichnet, daß** mit linienförmiger Laserstrahlung (11) die gesamte Breite einer Platte oder eines laufenden Bandes (10) impulsartig getrennt wird.

9. Verfahren nach einem oder mehreren der Ansprüche 1 bis 8, **dadurch gekennzeichnet, daß** während der Bestrahlung des Werkstücks das Trennen der Trennstücke (10') bewirkende mechanische oder magnetische Mittel verwendet werden.

10. Verfahren nach Anspruch 9, **dadurch gekennzeichnet, daß** als mechanische Mittel Schmelze aus dem aufgeschmolzenen Werkstückbereich austreibende Gasdüsen zur Anwendung kommen.

11. Verfahren nach Anspruch 9 oder 10, **dadurch gekennzeichnet, daß** als mechanische Mittel eine die Trennstücke (10') des Werkstücks voneinander entfernende Trennkraftquelle eingesetzt wird.

12. Verfahren nach einem oder mehreren der Ansprüche 1 bis 11, **dadurch gekennzeichnet, daß** das Werkstück mit voneinander distanzierten Transportmitteln gefördert wird, zwischen denen die Bearbeitung mit Laserstrahlung erfolgt und die als Trennkraftquellen dienen.

13. Verfahren nach einem oder mehreren der Ansprüche 1 bis 12, **dadurch gekennzeichnet, daß** als Transportmittel Treibrollenpaare (15,16) mit zur Trennstücktrennung unterschiedlich gesteuerten Fördergeschwindigkeiten verwendet werden.

14. Verfahren nach einem oder mehreren der Ansprüche 1 bis 13, **dadurch gekennzeichnet, daß** die linienartige Lasertrahlung zum Linienfügen eingesetzt wird.

15. Verfahren nach einem oder mehreren der Ansprüche 1 bis 14, **dadurch gekennzeichnet, daß** ein Werkstück aus Feinblech, Folien oder Kunststoff-Formteilen verwendet wird.

16. Vorrichtung zum Bearbeiten von Werkstücken mit Laserstrahlung (11) oder dergleichen Hochenergiestrahlung, die mit einem zum Werkstück relativ nicht bewegten Laserstrahl (12) auf eine zu bearbeitende Werkstückfläche fokussiert ist, wobei der Laserstrahl (12) linienartig fokussiert ist und sein Strahlfleck (13) vollflächig praktisch ausschließlich der zu bearbeitenden Werkstückfläche entspricht zur Durchführung der Verfahren nach einem der Ansprüche 1 bis 15, **dadurch gekennzeichnet, daß** für eine mit dem Werkstück während dessen Bestrahlung gleich schnelle Mitbewegung eines Strahlwerkzeugs ein Exzenterantrieb vorhanden ist.

17. Vorrichtung nach Anspruch 16, **dadurch gekennzeichnet, daß** sie einen gesteuerten Antrieb aufweist, der eine der Erzeugung des Laserstrahls (12) dienende Laserquelle und/oder eine den Laserstrahl (12) abgebende Vorrichtung etwaigen Werkstückbewegungen und/oder Positionierungen entsprechend zu verstellen vermag.

18. Vorrichtung nach einem der Ansprüche 16 oder 17, **dadurch gekennzeichnet, daß** der Laserstrahl (12) mit einem linienartigen Strahlfleck (13) die gesamte Länge einer auf dem Werkstück vorbestimmten Trennlinie abdeckt und daß Trennmittel zur Trennung der Trennstücke des Werkstücks während dessen Bestrahlung vorhanden sind.

19. Vorrichtung nach einem oder mehreren der Ansprüche 16 bis 18, **dadurch gekennzeichnet, daß** das Werkstück treibrollengefördert ist, und daß eine Steuereinrichtung für die Werkstückspannung bzw. Trennung vorhanden ist.

20. Vorrichtung nach einem oder mehreren der Ansprüche 16 bis 19, **dadurch gekennzeichnet, daß** zur Erzeugung der Laserstrahlung Diodenlaser-Strahlwerkzeuge vorhanden sind.

21. Vorrichtung nach einem oder mehreren der Ansprüche 16 bis 20, **dadurch gekennzeichnet, daß** zwei linienähnliche Laserstrahlen (12) vorhanden und auf einander gegenüberliegende Werkstückflächen desselben Bearbeitungsbereichs oder aufeinander folgender Bearbeitungsbereiche gerichtet sind.

22. Vorrichtung nach Anspruch 21, **dadurch gekennzeichnet, daß** die beiden Laserstrahlen (12) im Winkel zueinander angeordnet sind.

23. Vorrichtung nach einem oder mehreren der Ansprüche 16 bis 22, **dadurch gekennzeichnet, daß** sie Einstellmittel für den Linienverlauf und/oder die Linienform und/oder den Linienfokus und/oder den Intensitätsverlauf der Laserstrahlung über die Linienlänge aufweist.

## Claims

1. Method for processing workpieces by means of laser radiation (11) which is focussed onto a workpiece surface, which is to be processed, by means of a laser beam (12) which is not moved with respect to the workpiece, wherein the laser beam (12) is focussed in a linear manner and its beam spot (13) corresponds almost exclusively to the entire workpiece surface to be processed, **characterised in that** a laser radiation source and/or at least one processing head emitting the laser radiation (11) is moved together with a moved workpiece at the same speed when said workpiece is subjected to radiation.

2. Method as claimed in Claim 1, **characterised in that** a focussed line which is uniformly narrow over its entire length is used.

3. Method as claimed in Claim 1 or 2, **characterised in that** the line extends over the entire width of the workpiece and/or forms an outline, whose centre is not subjected to radiation, and/or has any predetermined line progression and/or the width of the line has a non-uniform progression.

4. Method as claimed in one or several of Claims 1 to 3, **characterised in that** a line is used which is formed from partial line lengths which successively cover the entire line length simultaneously or in cycles.

5. Method as claimed in one or several of Claims 1 to 4, **characterised in that** laser radiation is used which consists of an uninterrupted sequence of individual beams or groups of individual beams which simultaneously cover the entire length of the line or a partial length.

6. Method as claimed in one or several of Claims 1 to 5, **characterised in that** the laser radiation (11) is produced by means of diode laser bars (14) and/or diode laser stacks.

7. Method as claimed in one or several of Claims 1 to 6, **characterised in that** the laser radiation (11) is used for the purpose of severing.

8. Method as claimed in Claim 7, **characterised in that** the entire width of a plate or a conveyor belt (10) is severed in a pulse-like manner by means of linear laser radiation (11).

9. Method as claimed in one or several of Claims 1 to 8, **characterised in that** whilst the workpiece is subjected to radiation mechanical or magnetic means are used which sever the pieces (10') to be severed.

10. Method as claimed in Claim 9, **characterised in that** gas nozzles which expel the melt from the molten region of the work piece are used as the mechanical means.

11. Method as claimed in Claim 9 or 10, **characterised in that** a source of severing force is used as the mechanical means and separates the pieces (10'), which are to be severed, of the workpiece from one another.

12. Method as claimed in one or several of Claims 1 to 11, **characterised in that** the workpiece is conveyed by means of transporting means which are at a spaced disposition from one another, between which the processing by means of laser radiation is effected, and which serve as the sources of severing force.

13. Method as claimed in one or several of Claims 1 to 12, **characterised in that** driving roller pairs (15, 16) are used as the transporting means and have conveying speeds which are controlled differently for severing the pieces to be severed.

14. Method as claimed in one or several of Claims 1 to 13, **characterised in that** the linear laser radiation is used for line joining.

15. Method as claimed in one or several of Claims 1 to I4, **characterised in that** a workpiece consisting of a thin metal sheet, films or synthetic material moulded parts is used.

16. Device for processing workpieces by means of laser radiation (11) or similar high energy radiation which is focussed onto a workpiece surface, which is to be processed, by means of a laser beam (12) which is not moved with respect to the workpiece, wherein the laser beam (12) is focussed in a linear manner and its beam spot (13) corresponds almost exclusively to the entire workpiece surface to be processed, for the purpose of executing the method as claimed in any one of Claims 1 to 15, **characterised in that** a cam drive is provided for moving a beam tool together with the workpiece at the same speed whilst said workpiece is subjected to radiation.

17. Device as claimed in Claim 16, **characterised in that** it comprises a controlled drive which is capable of adjusting, in accordance with any workpiece movements and/or positioning, a laser source which is used to produce the laser beam (12) and/or a device emitting the laser beam (12).

18. Device as claimed in any one of Claims 16 or 17, **characterised in that** the laser beam (12) having a linear beam spot (13) covers the entire length of a predetermined severing line on the workpiece, and **in that** severing means are provided for severing the pieces, which are to be severed, of the workpiece whilst said workpiece is subjected to radiation.

19. Device as claimed in one or several of Claims 16 to 18, **characterised in that** the workpiece is conveyed on driving rollers, and **in that** a control device is provided for tensioning the workpiece or for severing purposes.

20. Device as claimed in one or several of Claims 16 to 19, **characterised in that** diode laser beam tools are provided for producing the laser radiation.

21. Device as claimed in one or several of Claims 16 to 20, **characterised in that** two linear laser beams (12) are provided and are directed onto mutually opposing workpiece surfaces of the same processing region or subsequent processing regions.

22. Device as claimed in Claim 21, **characterised in that** the two laser beams (12) are disposed at an angle with respect to each other.

23. Device as claimed in one or several of Claims 16 to 22, **characterised in that** it comprises adjusting means for the line progression and/or the line shape and/or the line focus and/or the intensity progression of the laser radiation over the length of the line.

## Revendications

1. Procédé pour usiner des pièces avec un rayonnement laser (11) qui est focalisé avec un rayon laser (12) non déplacé par rapport à la pièce sur une surface de pièce à usiner, le rayon laser (12) étant focalisé linéairement et sa tache focale (13) correspondant sur toute sa surface pratiquement uniquement à la surface de pièce à usiner, **caractérisé en ce que** pendant l'exposition d'une pièce au rayonnement, une source de rayonnement laser et/ou au moins une tête d'usinage émettant le rayonnement laser (11) sont déplacées à la même vitesse avec ladite pièce déplacée.

2. Procédé selon la revendication 1, **caractérisé en ce qu'**on utilise une ligne focalisée aussi étroite sur toute sa longueur.

3. Procédé selon la revendication 1 ou 2, **caractérisé en ce que** la ligne s'étend sur toute la largeur de la pièce et/ou définit un contour avec un centre non exposé au rayonnement et/ou a n'importe quel tracé prédéfini et/ou présente une largeur inégale.

4. Procédé selon l'une au moins des revendications 1 à 3, **caractérisé en ce qu'**on utilise une ligne composée de longueurs partielles qui couvrent simultanément ou successivement, par intermittence, toute la longueur de la ligne.

5. Procédé selon l'une au moins des revendications 1 à 4, **caractérisé en ce qu'**on utilise un rayonnement laser qui se compose de rayons individuels alignés sans interruption ou de groupes de rayons individuels qui couvrent simultanément toute la longueur de la ligne ou une longueur partielle.

6. Procédé selon l'une au moins des revendications 1 à 5, **caractérisé en ce que** le rayonnement laser (11) est produit à l'aide de barres de diodes laser (14) et/ou de piles de diodes laser.

7. Procédé selon l'une au moins des revendications 1 à 6, **caractérisé en ce que** le rayonnement laser (il) est utilisé pour la séparation.

8. Procédé selon la revendication 7, **caractérisé en ce qu'**à l'aide d'un rayonnement laser linéaire (11), toute la largeur d'une plaque ou d'une bande en circulation (10) est séparée par impulsions.

9. Procédé selon l'une au moins des revendications 1 à 8, **caractérisé en ce que** pendant l'exposition de la pièce au rayonnement, on utilise des moyens mécaniques ou magnétiques qui provoquent la séparation des pièces à séparer (10').

10. Procédé selon la revendication 9, **caractérisé en ce qu'**on utilise comme moyens mécaniques des injecteurs de gaz qui évacuent la matière en fusion de la zone de la pièce fondue.

11. Procédé selon la revendication 9 ou 10, **caractérisé en ce qu'**on utilise comme moyens mécaniques une source de force de séparation qui éloigne les unes des autres les parties à séparer (10') de la pièce.

12. Procédé selon l'une au moins des revendications 1 à 11, **caractérisé en ce que** la pièce est acheminée à l'aide de moyens de transport espacés entre lesquels a lieu l'usinage avec un rayonnement laser et qui servent de sources de force de séparation.

13. Procédé selon l'une au moins des revendications 1 à 12, **caractérisé en ce qu'**on utilise comme moyens de transport des paires de rouleaux d'entraînement (15, 16) avec des vitesses d'acheminement qui sont commandées différemment pour la séparation des pièces à séparer.

14. Procédé selon l'une au moins des revendications 1 à 13, **caractérisé en ce qu'**on utilise le rayonnement laser linéaire pour l'assemblage linéaire.

15. Procédé selon l'une au moins des revendications 1 à 14, **caractérisé en ce qu'**on utilise une pièce composée de tôle fine, de films ou de pièces profilées en matière plastique.

16. Dispositif pour usiner des pièces avec un rayonnement laser (11) ou un rayonnement à haute énergie similaire qui est focalisé avec un rayon laser (12) non déplacé par rapport à la pièce sur une surface de pièce à usiner, le rayon laser (12) étant focalisé linéairement et sa tache focale (13) correspondant sur toute sa surface pratiquement uniquement à la surface de pièce à usiner, pour la mise en oeuvre des procédés selon l'une des revendications 1 à 15, **caractérisé en ce que** pour qu'un outil de rayonnement soit déplacé avec la pièce à la même vitesse, pendant l'exposition de ladite pièce au rayonnement, il est prévu un entraînement à excentrique.

17. Dispositif selon la revendication 16, **caractérisé en ce qu'**il comporte un entraînement commandé qui peut déplacer une source laser servant à produire le rayon laser (12), et/ou un dispositif qui émet le rayon laser (12) suivant d'éventuels déplacements de la pièce et/ou positionnements.

18. Dispositif selon la revendication 16 ou 17, **caractérisé en ce que** le rayon laser (12) couvre avec une tache focale linéaire (13) toute la longueur d'une ligne de séparation prédéfinie sur la pièce, et **en ce que** des moyens de séparation sont prévus pour séparer les parties à séparer de la pièce, pendant l'exposition de celle-ci au rayonnement.

19. Dispositif selon l'une des revendications 16 à 18, **caractérisé en ce que** la pièce est acheminée par des rouleaux d'entraînement et **en ce qu'**il est prévu un dispositif de commande pour la tension de la pièce ou pour la séparation.

20. Dispositif selon l'une au moins des revendications 16 à 19, **caractérisé en ce que** pour produire le rayonnement laser, il est prévu des outils de rayonnement à diodes laser.

21. Dispositif selon l'une au moins des revendications 16 à 20, **caractérisé en ce que** deux rayons laser linéaires (12) sont prévus et sont dirigés vers des surfaces de pièce opposées de la même zone d'usinage ou de zones d'usinage successives.

22. Dispositif selon la revendication 21, **caractérisé en ce que** les deux rayons laser (12) sont disposés suivant un certain angle l'un par rapport à l'autre.

23. Dispositif selon l'une au moins des revendications 16 à 22, **caractérisé en ce qu'**il comporte des moyens de réglage pour le tracé de la ligne et/ou pour la forme de la ligne et/ou pour le point focal linéaire et/ou pour la courbe d'intensité du rayonnement laser sur la longueur linéaire.
